Europäisches Patentamt

European Patent Office

Office européen des brevets

(19)

(11) Publication number: **0 460 964 A2**

## (12) EUROPEAN PATENT APPLICATION

(21) Application number: 91305140.5

(51) Int. Cl.[5]: **H04N 9/89**

(22) Date of filing: 07.06.91

(30) Priority: 07.06.90 JP 149390/90

(43) Date of publication of application: 11.12.91 Bulletin 91/50

(84) Designated Contracting States: **DE FR GB**

(71) Applicant: **PIONEER ELECTRONIC CORPORATION No. 4-1, Meguro 1-chome Meguro-ku Tokyo-to (JP)**

(72) Inventor: **Kanda, Masao, c/o Pioneer Tokorozawa Plant 2610, hanazono 4-chome Tokorozawa-City, Saitama (JP)**

(74) Representative: **Tomlinson, Kerry John et al Frank B. Dehn & Co. European Patent Attorneys Imperial House 15-19 Kingsway London WC2B 6UZ (GB)**

(54) Time base correcting apparatus.

(57) A time base correcting apparatus has a construction in which an oscillator (31) to generate a write clock (WCK) for a memory (4) to record a video signal is controlled on the basis of a first phase error obtained (34) from a color burst and a second phase error obtained (35) from a horizontal sync signal. By allowing (9,SW1) the second phase error to dominantly operate for a predetermined period of time, the apparatus can also process a video signal of the PAL system.

EP 0 460 964 A2

# FIG.2

The present invention relates to a time base correcting apparatus and, more particularly, to a time base correcting apparatus for a video signal of the PAL system.

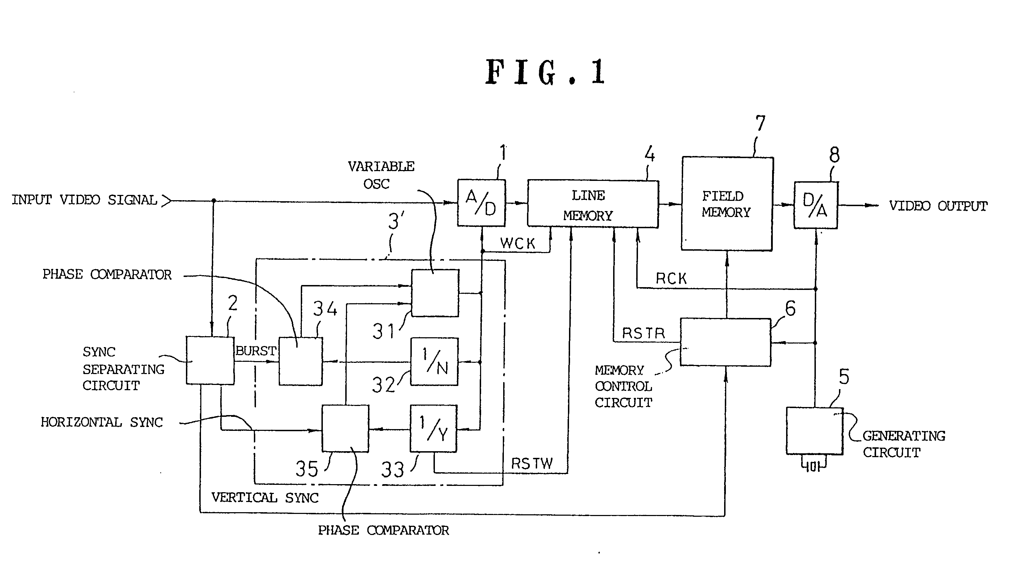

Fig. 1 shows a prior art time base correcting apparatus. In Fig. 1, a video signal is read out from a recording medium such as a video disk or the like and demodulated, so that a reproduction video signal is obtained and the video signal is supplied to the time base correcting apparatus. The input video signal is digitized by an A/D converter 1 by write clocks WCK which are produced by a write control circuit 3' in synchronism in phase with the video signal. The digital video signals are, further, sequentially written into a line memory 4 in synchronism with the write clocks WCK starting from a write address which has been initialized by a write start signal RSTW. On the other hand, the data written in the line memory 4 is read out therefrom in synchronism with read clocks RCK which are generated by a read clock generating circuit 5 on the basis of fixed reference clocks.

As mentioned above, a time base fluctuation component included in the input video signal can be eliminated by writing the video data into the line memory 4 by using the write clocks WCK in synchronism in phase with the input video signal and by reading out the data from the memory 4 by using the fixed read clocks RCK.

The construction and operations of the write control circuit 3' will now be described.

An output of a variable oscillator 31 serving as a write clock WCK is frequency divided into 1/N and 1/Y of the original signal by frequency dividers 32 and 33 and the frequency divided clocks are supplied to phase comparators 34 and 35 respectively. The phase comparators 34 and 35 perform the phase comparison of a color burst signal and a horizontal sync signal, which have been separated and extracted from the input video signal by a sync separating circuit 2, with the 1/N and 1/Y frequency divided outputs of the variable oscillator 31, respectively. The phase comparators 34 and 35 supply phase difference signals corresponding to the respective phase differences to the variable oscillator 31 as control input signals. Thus, the write clock WCK as an output of the variable oscillator 31 is synchronized in phase not only with the horizontal sync signal of the input video signal but also with the color burst signal and accurately follows a time base fluctuation of the input video signal. Therefore, the time base fluctuation of the input video signal can be accurately eliminated and the input video signal can be sampled by a predetermined phase of a color subcarrier.

In the above sampling process, no problem occurs if there is a relation between a color subcarrier frequency $f_{sc}$ of the input video signal and a horizontal synchronizing frequency $f_H$ as follows.

$$Nf_{sc} = Yf_H \text{ (N and Y are integers)}$$

In the case of the video signal of the PAL system, however, there is the following relation.

$$Nf_{sc} = Yf_H + \alpha \text{ ($\alpha$ is an offset frequency)}$$

In the conventional time base correcting apparatus, therefore, it is difficult for the video signal of the PAL system to execute a sampling of the color subcarrier at a predetermined phase relation and to generate write clocks which accurately trace the time base fluctuation of the input video signal. This is because the phase relation between the horizontal sync signal of the input video signal and the 1/Y frequency divided output of the frequency divider 33 is deviated by the offset frequency a since the control is performed so as to equalize the phases of the color subcarrier and the write clock. With this phase deviation, a generation timing of the write start signal RSTW is also deviated. The input video signal cannot be written into a predetermined address. An offset remains in the output of the phase comparator 35. The variable oscillator 31 cannot be controlled.

For instance, in the video signal of the PAL system, there is the following relation between the color subcarrier frequency $f_{sc}$ and the horizontal synchronizing frequency $f_H$.

$$4f_{sc} = 1135 f_H + 100$$

This means that there is an offset frequency of 25 Hz for the color subcarrier frequency $f_{sc}$. Such an offset frequency corresponds to one frame frequency of the video signal of the PAL system.

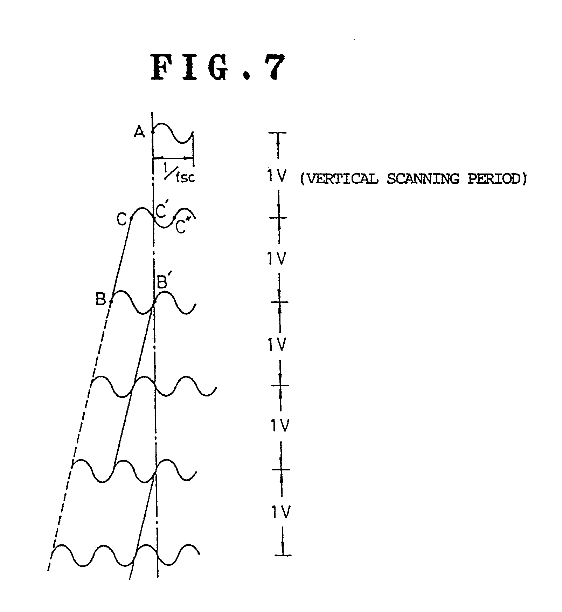

Therefore, when the phases of the horizontal sync signal are written so as to be aligned in the vertical direction as shown by the one-dot chain line in Fig. 7, the phases of the color subcarrier are deviated at a proportion of half a period of the color subcarrier for a vertical scanning period (1V). Assuming that the output of the variable oscillator 31 is always locked to the color subcarrier of the input video signal, the locking phase of the output of the frequency divider 33 for the input video signal is gradually deviated. Now, assuming that the output of the frequency divider 33 has been locked to a point A at a certain point of time, the locking position is shifted to a point B after the lapse of a time corresponding to one frame. Further, the locking position is sequentially deviated as shown by the dashed line in Fig. 7.

When the position of the output of the frequency divider 33 for the input video signal changes as mentioned above, the generation timing of the write start signal RSTW to initialize the write address in the line memory 4 changes also. Therefore, the input video signal cannot be written into a predetermined address in the line memory 4 (also cannot be written into a predetermined address in a field memory 7). Further, since the phase relation between the output of the frequency divider 33 and the horizontal sync signal is deviated, the offset voltage remains in the output of the phase comparator 35 and the variable oscillator 31 cannot be controlled.

It is, therefore, an object of the invention to provide a time base correcting apparatus which can perform the time base correction of a video signal having an offset in the relation between the color subcarrier frequency and the horizontal synchronizing frequency.

According to the invention, there is provided a time base correcting apparatus having write clock generating means for generating a write clock corresponding to a time base fluctuation of an input video signal and read clock generating means for generating a read clock on the basis of a fixed reference signal, in which the input video signal is written into a memory in synchronism with the write clock and stored information is read out from the memory in synchronism with the read clock, wherein the input video signal is a video signal of the PAL system which includes first and second sync signals of frequencies $f_1$ and $f_2$ and has a relation of $Nf_1 = Yf_2 + \alpha$ (N and y are integers and a is an offset frequency) between the first and second sync signals, and the write clock generating means comprises: a variable oscillator having a center frequency of $Nf_1$; a first frequency divider for frequency dividing an output of the variable oscillator at a rate of 1/N; a second frequency divider for frequency dividing the output of the variable oscillator at a rate of 1/Y; a first phase comparator for obtaining a first phase difference signal corresponding to a phase difference between an output of the first frequency divider and the first sync signal and for supplying it to the variable oscillator as a control input; a second phase comparator for obtaining a second phase difference signal corresponding to a phase difference between an output of the second frequency divider and the second sync signal and for supplying it to the variable oscillator as a control input; and control means for allowing the second phase difference signal to dominantly operate as the control input of the variable oscillator for a predetermined period of time.

In the time base correcting apparatus according to the invention, an oscillating frequency of the variable oscillator for generating the write clock is controlled on the basis of a first phase error obtained from a calor burst signal as a first sync signal and a second phase error obtained from a horizontal sync signal as a second sync signal. Within a vertical blanking period of time or a control period of time in a special reproducing mode, the second phase error is allowed to dominantly operate as a control input of the variable oscillator. Thus, even if there is an offset in the relation between the color subcarrier frequency and the horizontal synchronizing frequency, the video signal is sampled at a predetermined phase of the color subcarrier and can be written into a predetermined address in the memory.

An embodiment of the invention will now be described by way of example only and with reference to the drawings.

BRIEF DESCRIPTION OF THE DRAWINGS

Fig. 1 is a block diagram showing an example of a conventional time base correcting apparatus;

Fig. 2 is a block diagram showing an embodiment of the invention;

Figs. 3 and 4 are circuit diagrams showing practical examples of the construction of a variable oscillator in the apparatus of Fig. 2;

Figs. 5 and 6 are waveform diagrams for explaining the operations in the SCAN and STILL modes in a CLV disk; and

Fig. 7 is a waveform diagram showing a phase change of a color subcarrier to a reference phase of a horizontal sync signal.

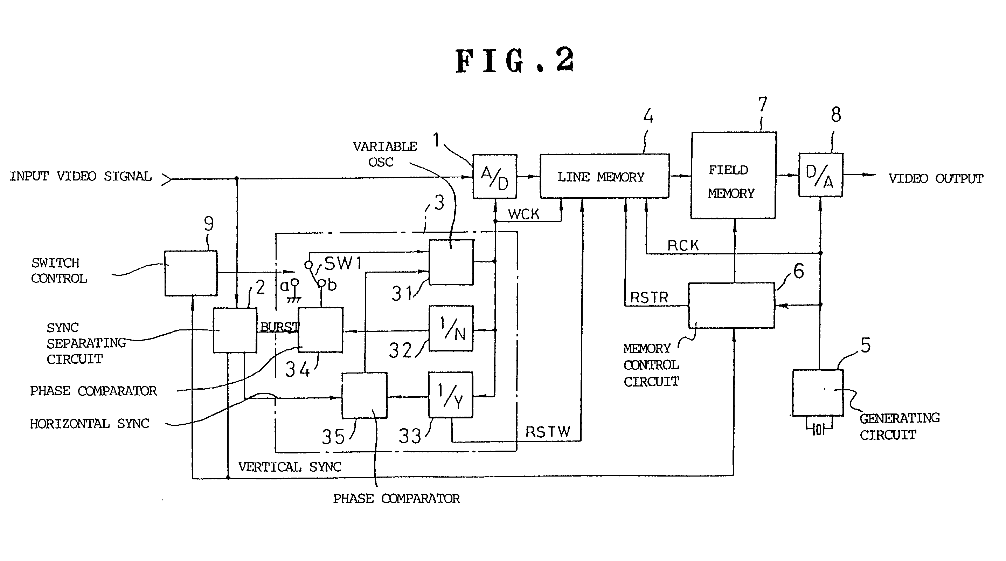

Fig. 2 is a block diagram showing an embodiment of the invention. In the diagram, a video signal is read out from a recording medium (not shown) such as a video disk or the like and is demodulated, so that a reproduction video signal is obtained and used as an input video signal. The input video signal is supplied to the A/D converter 1 and sync separating circuit 2. The sync separating circuit 2 separates and extracts a color burst signal, a horizontal sync signal, and a vertical sync signal which are included in the input video signal. The separated and extracted color burst signal and horizontal sync signal are supplied to a write control circuit 3. The write control circuit 3 is provided to generate the write clock WCK according to a time base fluctuation of the input video signal. A practical construction and operations of the write control circuit 3 will be explained hereinafter. The A/D converter 1 converts the input video signal into a digital signal in synchronism with the write clock WCK.

The digital video signal converted by the A/D converter 1 is sequentially written into a predetermined address in the line memory 4 having a capacity corresponding to 1 H (H denotes a horizontal scanning period) in synchronism with the write clock WCK. The write address in the line memory 4 is initialized by the write start signal RSTW which is generated from the write control circuit 3. On the other hand, the read clock RCK to read out the data from the line memory 4 is generated by the read clock generating circuit 5 on the basis of a fixed reference clock which is derived by a quartz oscillator or the like. The read start signal RSTR to initialize the read address is generated by a memory control circuit 6 on the basis of the read clock RCK. The data which has been read out from the line memory 4 is once written into the field memory 7 having a capacity of one field and, after that, it is read out under the control of the memory control circuit 6. The readout data is transformed again to an analog video signal by a D/A converter 8 in synchronism with the read clock RCK.

In the field memory 7, the input video signal is written into a predetermined address. Therefore, the write address in the line memory 4 also needs to be set to a predetermined address for the input video signal. For this purpose, the write start signal RSTW is generated at a fixed timing of each line of the input video signal. By previously determining the relation between the write start signal RSTW and the write address in the field memory 7 and by supplying the vertical sync signal which has been separated and extracted from the input video signal by the sync separating circuit 2 to the memory control circuit 6, the write address in the field memory 7 is set to a predetermined address.

A construction and operations of the write control circuit 3 will now be described. The fundamental construction and operations of the write control circuit are substantially the same as those of the write control circuit 3' in Fig. 1 except the following point. That is, there is newly provided a selecting switch SW₁ for alternatively selecting either one of a grounding level (side a) and a comparison output (side b) of the phase comparator 34 and supplying it to the variable oscillator 31 as a control input. The selecting switch SW₁ is switched and controlled by a switch control circuit 9. The side a is selected for a period of time when the vertical sync signal is generated. The side b is selected in a period of time other than the above period. In the ordinary reproducing mode, any one or both of the field period and the frame period can be used as a period of time to control the selecting switch SW₁ for the vertical blanking period.

In the above construction, by turning the switch SW₁ to the side a for the vertical blanking period when the vertical sync signal is generated, the variable oscillator 31 is controlled only by a comparison output of the phase comparator 35 as a phase difference signal between the horizontal sync signal and the 1/Y frequency divided output of the frequency divider 33. Thus, the phase of the 1/Y frequency divided output of the frequency divider 33 for the input video signal is always returned to the same phase. On the other hand, by switching the switch SW₁ to the side b in the period of time other than the vertical blanking period, a comparison output of the phase comparator 34 as a phase difference signal between the color burst signal and the 1/N frequency divided output of the frequency divider 32 is supplied to the variable oscillator 31 as a control input. Thus, the phase of the 1/Y frequency divided output of the frequency divider 33 is changed to the locking position with the closest color subcarrier. However, such a phase is deviated from the position which has been initialized in the vertical sync period by only a distance of at most only the period of the color subcarrier.

It takes a short time until the output of the variable oscillator 31 is locked to the color subcarrier after the selecting switch SW₁ is switched to the b side. However, it is sufficient that the phase can be locked for a time when the effective screen portion is written into the line memory 4. Therefore, it is enough to switch the switch SW₁ to the side b after the end of the vertical sync signal period of time as in the embodiment. The phase of output of the frequency divider 33 for the actual input video signal is as shown by a solid line in Fig. 7. Although Fig. 7 shows a case where the relocking position after completion of the initialization at position C is again set to the position C, there can be a case where the phase is again locked at position C''.

As mentioned above, in the construction in which the variable oscillator 31 to generate the write clock WCR is controlled on the basis of the first phase error obtained from the color burst signal and the second phase error obtained from the horizontal sync signal, the control by the first phase error is inhibited for the vertical blanking period when the vertical sync signal is generated, so that the control by the second phase error becomes dominant and the output of the frequency divider 33 for the input video signal, that is, the phase of the write start signal RSTW can be held at almost the same position. Therefore, the data can be written into an almost predetermined address and the problem of the offset of the output of the phase comparator 35 will not occur.

In the above embodiment, the field memory 7 having the capacity of one field has been provided after the line memory 4. However, the invention is not limited to the field memory 7 but can also use a frame memory having a capacity of one frame or a memory having a capacity larger than the above capacity. Further, if a field memory which can independently control the writing side and the reading side is used, the line memory 4 is not particularly necessary.

In the embodiment, the selecting switch SW₁ has been controlled by the switch control circuit 9 on the basis of the vertical sync signal. However, it is also possible to use another signal if a period of time is obtained in which the output of the variable oscillator 31 is stably locked with the input video signal until an effective screen portion is written into the line memory 4.

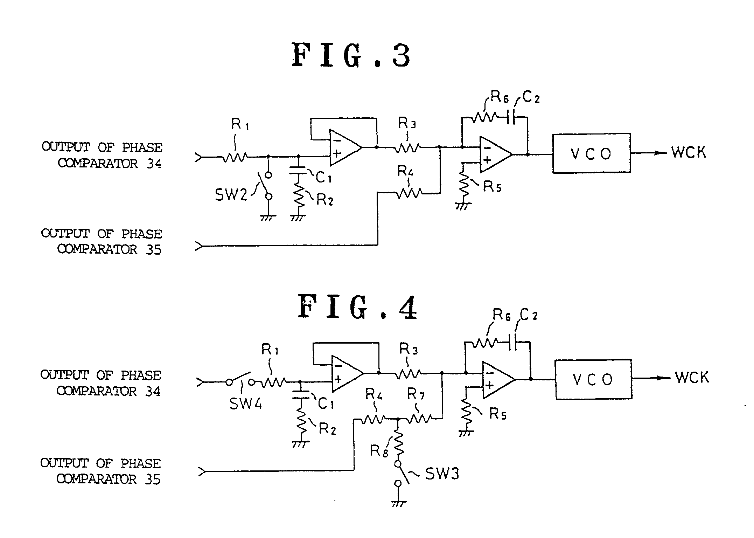

Further, in the above embodiment, the grounding level is selected by the selecting switch SW₁ for the vertical blanking period and the supply of the comparison output of the phase comparator 34 is inhibited, thereby allowing the comparison output of the phase comparator 35 to dominantly operate as a control input of the variable oscillator 31. However, the selecting switch SW₁ can be set to an open state and the output level of the phase comparator 34 can be also reduced. In brief, it is sufficient to construct the circuit such that the comparison output of the phase comparator 35 dominantly acts as a control input of the variable oscillator 31. Practical examples in the above case will now be described hereinbelow with reference to Figs. 3 and 4.

Figs. 3 and 4 are circuit diagrams showing practical examples of the construction of the variable oscillator 31 having a voltage controlled oscillator VCO whose oscillating frequency is variable in accordance with a control voltage. To allow the comparison output of the phase comparator 35 to dominantly act as a control input of the variable oscillator 31 for the vertical blanking period of time, the output of the phase comparator 34 is reset by a switch $SW_2$ in the circuit example of Fig. 3. Since a time constant circuit comprising resistors $R_1$ and $R_2$ and a capacitor $C_1$ has a relatively large time constant, it is desirable to use a construction such as to sufficiently discharge the time constant circuit. On the other hand, in the circuit example of Fig. 4, a loop gain by the phase comparator 35 is enlarged by opening a switch $SW_3$. By opening the switch $SW_3$ for a period of time when a burst in the vertical blanking period doesn't exist, the comparison output of the phase comparator 35 dominantly acts as a control input of the variable oscillator 31. At this time, as shown in the diagram, the supply of the output of the phase comparator 34 can be also inhibited by a switch $SW_4$. Or, as in the case of Fig. 3, the output of the phase comparator 34 can be also reset by the switch $SW_2$.

In the above embodiment, the comparison output of the phase comparator 35 has been allowed to dominantly act as a control input of the variable oscillator 31 for the vertical blanking period in the ordinary reproducing mode. However, for instance, in a video disk player, in the case where data is intermittently written into a memory by executing a special reproducing process in the SCAN mode, STILL mode, or the like, the switching control of the selecting switch $SW_1$ can be also performed on the basis of a signal indicating that the apparatus is in the SCAN or STILL mode.

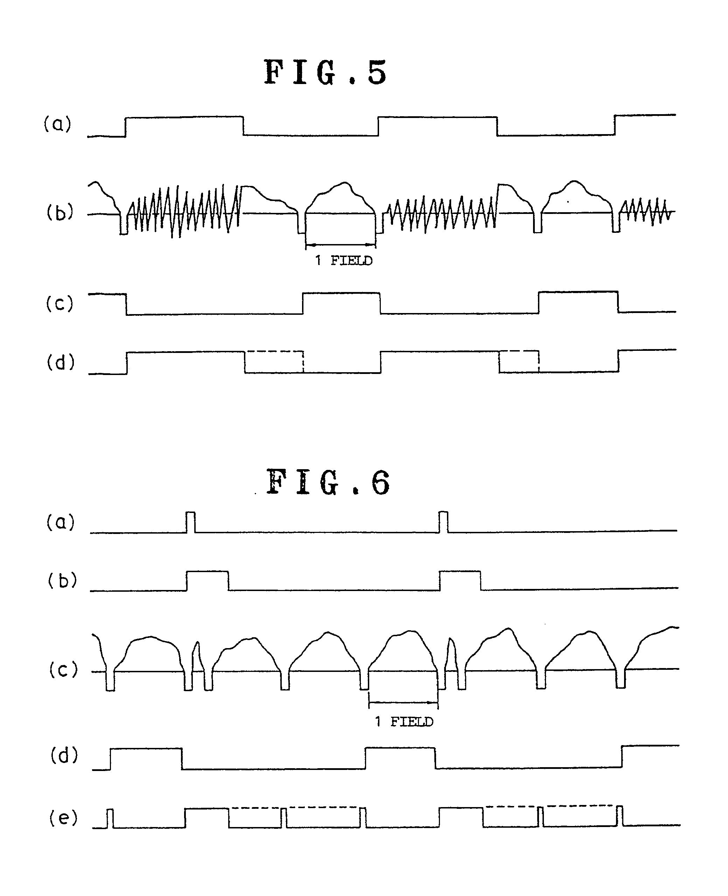

For example, in the case of playing the apparatus in the SCAN mode for the CLV (constant linear velocity) disk, a control signal (a) indicative of the SCAN mode in Fig. 5 is held at the high level for a period of time when a pickup is sent in an open state of a tracking servo loop. When the tracking servo loop is set into the closed state and the forced feeding operation of the pickup is stopped, the control signal (a) is set to the low level. A video signal (b) of one field from the vertical sync signal which has first been sent after the control signal (a) had been set to the low level is written into the memory under the control of a write control signal (c). After completion of the writing into the memory, the control signal (a) is again set to the high level and the pickup is forcibly moved. In the SCAN operation, the selecting switch $SW_1$ is switched to the a side by a switch control signal (d) shown by a solid line or a broken line for a period of time other than the period of time when the scanning operation is executed or when the writing operation into the memory is performed. Particularly, since an error signal by the burst signal cannot be produced for a period of time shown by a solid line, it is preferable to reset the burst loop (the selecting switch $SW_1$ is switched to the a side).

On the other hand, in the case of executing the STILL operation for the CLV disk, in Fig. 6, a track jumping process is executed by a jump signal (a). After the track jumping process was performed, the servo pull-in is inhibited by a control signal (b) which is set to the high level for only a predetermined period of time so as not to cause a malfunction of an equivalent pulse eliminating circuit by the arrival of an equivalent pulse. After the track jump, a video signal (c) of one field is written into the memory by a write enable signal (d). The switching control of the selecting switch $SW_1$ is performed by also using the control signal (b) in addition to the signal within the vertical blanking period in the ordinary reproducing mode. A switch control signal (e) at this time is as shown by a solid line. As shown by a broken line, the switching control of the switch $SW_1$ can be also performed for a period of time other than the period of time when the data is written into the memory.

As described above, in the time base correcting apparatus according to the invention, the variable oscillator to generate the write clock is controlled on the basis of the first phase error by the color burst signal and the second phase error by the horizontal sync signal. The second phase error is allowed to dominantly act as a control input of the variable oscillator for the vertical blanking period of time. Therefore, even if an offset exists in the relation between the color subcarrier frequency and the horizontal sync frequency, the video signal can be sampled at a predetermined phase of the color subcarrier and can be written into a predetermined address in the memory.

During the reproduction of discontinuous signals in the SCAN mode, STILL mode, or the like, the variable oscillator is controlled by the phase error obtained from the horizontal sync signal, so that the phase can be rapidly locked.

## Claims

1. A time base correcting apparatus having write clock generating means for generating a write clock according to a time base fluctuation of an input video signal and read clock generating means for generating a read clock on the basis of a fixed reference signal, in which the input video signal is written into a memory in synchronism with the write clock and stored information is read out from the memory in synchronism with the read clock, wherein the input video signal is a video signal of a PAL system which includes first and second sync signals of frequencies $f_1$ and $f_2$ and has a relation of $Nf_1 = Yf_2 + \alpha$ (N and Y are integers and $\alpha$ is an offset frequency) between the first and second sync signals, and the write clock generating means comprises:

a variable oscillator having a center frequency of $Nf_1$;

a first frequency divider for frequency dividing an output of the variable oscillator at a rate of 1/N;

a second frequency divider for frequency dividing the output of the variable oscillator at a rate of 1/Y;

a first phase comparator for obtaining a first phase difference signal corresponding to a phase difference between an output of the first frequency divider and the first sync signal and for supplying it to the variable oscillator as a control input;

a second phase comparator for obtaining a second phase difference signal corresponding to a phase difference between an output of the second frequency divider and the second sync signal and for supplying it to the variable oscillator as a control input; and

control means for allowing the second phase difference signal to dominantly operate as a control input of the variable oscillator for a predetermined period of time.

2. The apparatus of claim 1, wherein the control means inhibits a supply of the first phase difference signal to the variable oscillator for said predetermined period of time.

3. The apparatus of claim 1, wherein said control means increases a loop gain by the second phase comparator for said predetermined period of time.

4. The apparatus of claim 1, 2 or 3 wherein said predetermined period of time is a vertical blanking period of time of the video signal of the PAL system in an ordinary mode.

5. The apparatus of claim 1, 2 or 3 wherein said predetermined period of time includes a period of time when discontinuous signals are reproduced in a special reproducing mode.

FIG. 1

# FIG.2

# FIG.3

OUTPUT OF PHASE
COMPARATOR 34

OUTPUT OF PHASE
COMPARATOR 35

$R_1$  $R_3$  $R_6$  $C_2$  $R_4$  $R_5$  $C_1$  $R_2$  SW2

VCO → WCK

# FIG.4

OUTPUT OF PHASE
COMPARATOR 34

OUTPUT OF PHASE
COMPARATOR 35

$R_1$  $R_3$  $R_6$  $C_2$  SW4  $C_1$  $R_2$  $R_4$  $R_7$  $R_5$  $R_8$  SW3

VCO → WCK

# FIG.5

(a)

(b)

1 FIELD

(c)

(d)

# FIG.6

(a)

(b)

(c)

1 FIELD

(d)

(e)

# FIG.7

$\frac{1}{\text{fsc}}$

1 V (VERTICAL SCANNING PERIOD)

1 V

1 V

1 V

1 V